# EUROPEAN PATENT SPECIFICATION

(11) **EP 3 379 125 B1**
(45) Date of publication and mention of the grant of the patent: **06.11.2019**
(21) Application number: 17425035.7
(22) Date of filing: 23.03.2017
(51) Int. Cl.: F16L 25/00, F16L 33/207, F16L 33/22, F16L 47/02, B29C 65/06, F16L 33/34

(54) **PRESSURE-TIGHT HOSE AND FITTING ASSEMBLY AND RESPECTIVE METHOD OF MANUFACTURING SAID HOSE AND FITTING ASSEMBLY**
DRUCKFESTES SCHLAUCH UND ANSCHLUSSANORDNUNG UND ENTSPRECHENDES HERSTELLUINGSVERFAHREN
ENSEMBLE DE TUYAU ET EMBOUT ÉTANCHE À PRESSION ET PROCÉDÉ DE FABRICATION CORRESPONDANTE

(43) Date of publication of application: 26.09.2018
(73) Proprietor: Miflex 2 S.p.A., 20852 Villasanta (MB) (IT)
(72) Inventor: MAZZO, Mauro, 23880 Casatenovo (Lecco) (IT)
(74) Representative: Botti, Mario

(56) References cited:
- EP-A1- 2 792 925
- DE-A1- 10 207 556
- DE-A1- 19 704 227
- DE-A1-102008 017 922
- US-A1- 2013 118 629

## Description

### Field of application

The present invention relates to a pressure-tight hose and fitting assembly, in particular of the type designed for the connection of an apparatus (e.g. washing machine, dish washer or tapware) to the water mains.

The invention may be usefully employed in particular for the installation of white electric household appliances or for the installation of heat pumps, showers or similar apparatuses.

### Prior art

In the abovementioned industrial sectors it is well-known that there exists the need to provide a reliable fluid connection between an apparatus and a water supply network. This is the case for example of electric household appliances which use water from the water mains in order to perform washing cycles, typically for laundry or dishware, or heat pumps which require a similar hydraulic connection, or shower systems for kitchens and bathrooms.

In order to provide the necessary fluid connections, flexible hoses are used, these being engaged at one of their ends onto an apparatus or a shower and at the their other end onto an outlet of the water mains.

It should be noted that these hoses must be sufficiently pressure-tight to be able to ensure a reliable connection to the mains supply. Hoses which are able to withstand an operating pressure of at least 10-20 bar are therefore used. In order to obtain the desired pressure-tightness characteristics while maintaining a high degree of flexibility of the hose, i.e. a minimum diameter of curvature equal to about four times the outer diameter, hoses are made with a plastic layer suitably softened with rubber or plasticizer additives and then reinforced with an external or intermediate braiding.

The flexible hose therefore has a single-layer design, whereby an extruded or corrugated thermoplastic layer, or a rubber layer, is lined with a reinforcement consisting of a single-yarn polyamide, polyester or similar braiding. Alternatively, double-layer designs may be used, where the braiding is arranged between a core and an outer thermoplastic or rubber layer.

The use of corrugated hoses is preferable since they ensure greater flexibility and manageability of the hose and prevent kinking or localized closing of the hose aperture due to accidental folding of the hose itself. Moreover, corrugated hoses are generally made of polypropylene or polyethylene without the addition of additives, therefore ensuring over time a perfect potability of the water transported.

The connection of the hose to the water mains and to the machine or to the shower head attachment is made possible by suitably shaped fittings which are integrally joined together with one or both ends of the flexible hose.

Conventionally, the attachment of the fitting to the end of the flexible hose is performed by means of a metal bush crimped onto the hose and acting as a fixing clip for the underlying fitting.

This solution, while substantially satisfying the needs of the sector in that it ensures a suitable pressure-tightness, nevertheless is subject to the risk of leakages and losses at the crimped interface, in particular during long-term use.

The leak-tightness problems arise in particular in the case of corrugated hoses. The presence of ridges and depressions on both the outer surface and on the inner surface of the corrugated hose means that there is localized contact in the region of the ridges between the inner surface of the hose and the inserted fitting onto which is clamped. The limited adhesive area between these two elements results in a reduction in the pressure-tightness properties. This drawback has undoubtedly contributed to discourage the use of this type of hose in connections to the water mains, despite the advantages associated with the greater flexibility and easier handling.

In order to overcome these drawbacks, some hose manufacturers have proposed alternative solutions for connecting the connection hose to the connection fitting. In these alternative solutions, the fitting is formed directly at the end of the connection hose by means overmoulding or thermoforming on smooth non-corrugated hoses. Thus, in return for a higher production cost, a single-piece hose and fitting assembly with no discontinuities is obtained.

In order to be able to apply these production techniques with satisfactory results, the hose must however not have any reinforcing braiding, since the presence of this braiding would otherwise result in a substantial weakening of the weld at the interface between braiding and fitting. In order to ensure the necessary pressure-tightness, it is therefore necessary to use hoses made of rigid or semi-rigid thermoplastic materials. The hose and fitting assembly obtained as a result therefore has a relatively high rigidity, making the installation even be specialized personnel very difficult.

Alternatively, the braiding must be strictly made of the same material as the hose and the fitting, this limiting considerably the constructional options and prejudicing absolutely the use of metal, for example steel, braiding.

For this reason, hoses and fittings made of crosslinked polyethylene have not managed to replace on the market conventional hoses with crimped fittings which, even though subject to a superior drawing process, are often preferred owing to their flexibility and their lower cost.

An alternative solution to those mentioned above, which is described in European Patent Application No. 14165288.3, published under the number EP 2 792 925 A, in the name of the same

Applicant, proposes the use of spin welding in order to fix a hose with reinforcing braiding to a thermoplastic fitting. The fitting has a special annular bush inside which the end of the hose is inserted in order to perform welding. By means of the spin welding process it is possible to obtain a stable and absolutely water-tight weld, eliminating potential leakages during connection of the apparatus to the water mains.

The aforementioned solution, which is extremely advantageous in the case of triple-layer hoses with an intermediate braiding reinforcement, is however not equally effective for two-layer hoses with an outer braiding reinforcement, in particular where the braiding is made of material which is non-homogeneous compared to that of the innermost layer.

The Applicant has in fact noticed that said products have the drawback of a reduced mechanical resistance of the hose to the risk of extraction from the fitting, probably due to the poor adhesion of the braided reinforcement made of non-homogeneous material to the outer surface of the bush.

It should also be pointed out that precisely corrugated hoses which, as mentioned are supposed to be particularly advantageous because of their easy handling and resistance to kinking, as well as the guarantees of potability which they offer, have a very low pressure resistance if they are not reinforced.

A hose and fitting assembly according to the prior art is also disclosed in document US 2013/118629.

The technical problem forming the basis of the present invention is, therefore, that of devising a hose and fitting assembly which overcomes the drawbacks encountered in the prior art.

### Summary of the invention

The aforementioned technical problem is solved by a pressure-tight hose and fitting assembly designed for connecting an apparatus to a supply network, for example a water supply network, comprising: a flexible hose comprising at least one inner layer made of thermoplastic material and at least one textile or metallic reinforcing layer on the outside of said inner layer; a fitting made of thermoplastic material and comprising an attachment lug introduced inside an attachment end of said flexible hose, said fitting defining internally a fluid path between a first opening and a second opening at the end of said attachment lug; a spin weld between said attachment lug and the inner layer of said flexible hose at said attachment end, which weld locally defines a fluid seal; and an annular fixing member coupled by means of interference on the outside of the attachment end of said flexible hose, said fixing member exerting a clamping pressure on said attachment end.

A person skilled in the art will understand how the invention differs fundamentally from the hose assemblies of the prior art, i.e. both those assemblies with a crimped ferrule and those with spin welding.

In ferrule assemblies, the crimping is in fact designed to ensure leak-tightness of the assembly. In the present invention, instead, the leak-tightness is ensured by the seal defined by the inner weld, while the outer fixing member has the sole function of preventing extraction of the reinforcing layer and increasing therefore the mechanical strength thereof.

In the assemblies prepared by spin welding, the weld which surrounds the end of the hose ensures on its own both the connection and sealing functions. It is thus necessary to form a bush in the fitting inside which the end of the hose may be introduced in order to form a weld on both sides of the hose, thus ensuring a sufficiently strong fixing action.

The idea forming the basis of the present invention arises instead from the insight that the two aforementioned functions performed in the prior art by a single fixing system, i.e. crimped ferrule or spin welding, may be separated.

The aforementioned reinforcing layer consists of a layer which is braided, spiralled, meshed, netted or otherwise formed from one of more yarns or wires arranged so as to cover partially or totally an underlying layer, which may be in the case in question the inner layer defined above.

The layer may be made of natural or artificial textile fibre or metal wire or other material suitable for the purpose.

The reinforcing layer may be the outermost layer of said flexible hose, said fixing member being then directly coupled onto said reinforcing layer.

In this case, the mechanical strength defect associated with the spin welded assemblies of the prior art, where the outermost reinforcing layer made of incompatible material does not form a sufficiently strong bond with the opposite surface of the bush, does not occur.

The inner layer is a corrugated hose.

Owing to the design according to the invention, in fact, a corrugated hose with outer reinforcing layer may be effectively coupled together with a respective fitting, without being affected by problems of leak-tightness or excessive oversizing of the assembly, as is the case with the assembly configurations used hitherto.

The use of a corrugated hose offers numerous and substantial advantages: in particular flexibility, lightness, prevention of kinking and complete elimination of the phthalates or plasticizers used during production. It is also possible to make these hoses using materials approved for alimentary use, with a consequent guarantee as to the potability of the water transported.

The corrugated hose has a plurality of internal ridges; said weld may be advantageously localized between one or more of said internal ridges and an outer surface of the attachment lug arranged opposite the hose.

In order to ensure an efficient spin welding action, the inner layer of thermoplastic material and the fitting may be made of the same thermoplastic material or thermoplastic materials from the same family.

The thermoplastic materials used may be, purely by way of example, polypropylene, polyethylene, nylon and other plastics suitable for spin welding.

The fixing member mentioned above may in particular take the form of a ferrule crimped onto the attachment end of the flexible hose.

A portion of said ferrule is in this case preferably fitted around a cylindrical base of the fitting, having a diameter equal or greater than that of the flexible hose.

On the other hand, the fixing member may be made differently, for example it may take the form of a sleeve with a frustoconical internal profile coupled by means of interference or interlocking - cone on cone - onto the attachment end of the flexible hose.

The fitting has preferably at least one non-cylindrical attachment profile situated on the opposite side to the attachment lug and designed to allow connection to a spindle of a spin welding machine. Said non-cylindrical attachment profile may be formed inside the fitting, for example in the form of a hexagonal recess, or externally, for example in the form of two surfaces surface-milled on an otherwise cylindrical outer profile.

Said end for attaching the flexible hose preferably abuts against a shoulder defined between the attachment lug and the rest of the fitting.

The pressure-tight hose and fitting assembly according to the present invention is preferably able to withstand an operating pressure of at least 10 bar, even preferably a pressure of at least 20 bar.

The aforementioned technical problem is also solved by a method of manufacturing a pressure-tight hose and fitting assembly designed for connecting an apparatus to the water mains, comprising the following steps:
- preparing a flexible hose comprising at least one inner layer of thermoplastic material, which is a corrugated hose, and at least one textile or metal reinforcing layer on the outside of said inner layer;
- preparing a fitting made of thermoplastic material, comprising an attachment lug, said fitting defining internally a fluid path between a first opening and a second opening at the end of said attachment lug;

- introducing said attachment lug inside an attachment end of said flexible hose;
- spin welding said attachment lug to the inner layer of the flexible hose;
- joining by means of interference an annular fixing member to the outside of the attachment end of said flexible hose so as to fasten the flexible hose to the fitting.

Said step of providing a flexible hose comprises a step of covering the inner layer with one or more yarns or wires by means of braiding, spiralling, meshing or netting so as to form said reinforcing layer.

Where said fixing member is a ferrule, said step of clamping the fixing member may comprise crimping said ferrule onto the attachment end of the flexible hose.

Where instead the fixing member is a sleeve, said step of coupling the fixing member comprises axially sliding said sleeve until it is coupled, by means of interlocking or interference, onto the attachment end of the flexible hose.

Further characteristic features and advantages will emerge more clearly from the detailed description provided hereinbelow of a preferred, but not exclusive, embodiment of the present invention with reference to the attached figures provided by way of a non-limiting example.

### Brief description of the drawings

Figure 1 shows a schematic view of the components of the hose and fitting assembly according to a first variant of the present invention before assembly, where the terminal portion of the hose on the left is shown cross-sectioned, without the reinforcing braiding, the fitting/ferrule assembly on the right being shown cross-sectioned;
Figure 2 shows a cross-sectioned schematic view of the assembly according to the variant of Figure 1, before crimping of the ferrule;
Figure 3 shows a cross-sectioned schematic view of an assembly according to a second variant of the invention, before crimping of the ferrule;
Figure 4 shows a cross-sectioned schematic view of an assembly according to a third variant of the invention, before crimping of the ferrule;
Figure 5 shows a cross-sectioned schematic view of an assembly according to a fourth variant of the invention, before crimping of the ferrule;
Figure 6 shows a cross-sectioned schematic view of an assembly according to a fifth variant of the invention;

### Detailed description

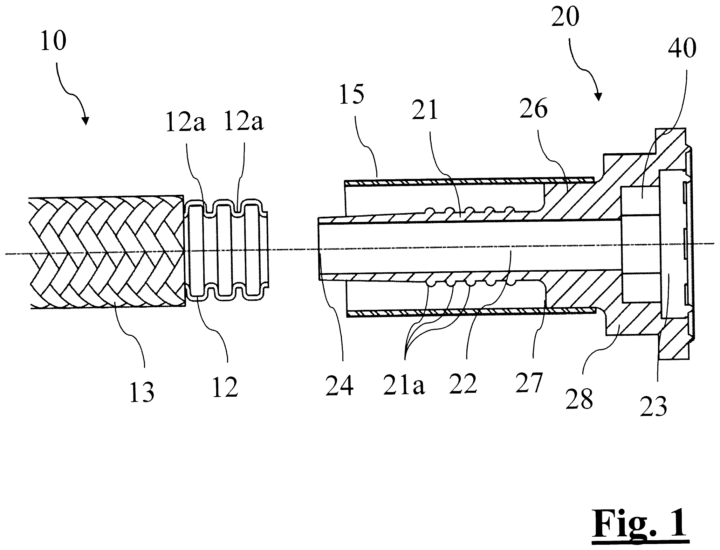

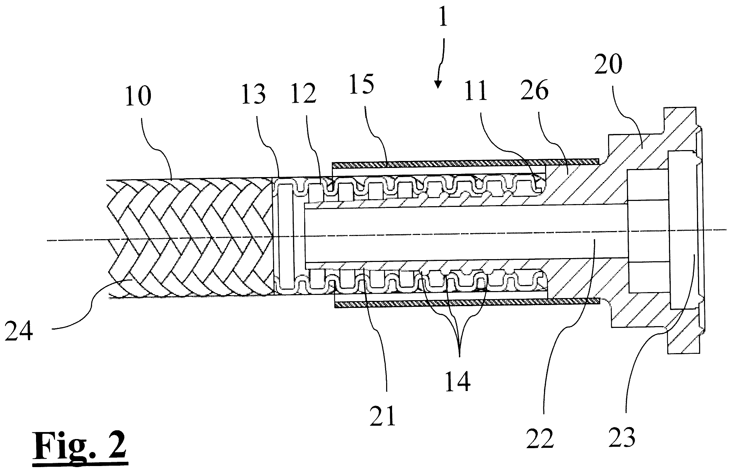

With reference to the attached Figure 2, 1 denotes in general a hose and fitting assembly according to a first variant of the present invention. As discussed above, the hose and fitting assembly performs the function of connecting an apparatus, for example an electric household appliance or a heat pump or a shower head, to a supply network such as the water mains; or connecting a tap to a valve, or other similar functions which may easily be envisaged by a person skilled in the art.

The hose and fitting assembly 1 comprises in particular a flexible hose 10 known per se. At least one end of the flexible hose 10, which will be referred to below as attachment end 11, is integrally joined together with a fitting 20 of thermoplastic material, which allows engagement with the apparatus or the water mains.

It should be noted that preferably a respective fitting 20 is provided at both the ends of the flexible hose 10. Nevertheless, in order to avoid complicating unnecessarily the present description, below reference will be made to the fixing of a single fitting 20 to the attachment end 11 defined above, it being understood that it is possible to repeat this operation in order to fix at the opposite end an additional fitting having a similar form at least as regards those parts in contact with the flexible hose.

The flexible hose 10 may consist of any hose known in the art and used in the technological sector relevant to the present invention, in particular single or multiple layer hoses having at least one innermost layer of thermoplastic material.

The flexible hose 10 comprises an inner layer 12 formed by a corrugated hose, of the type known per se, on top of which a single reinforcing layer 13 of the known type, for example a single-yarn braiding of polyamide, polyester or other materials suitable for the purpose is formed.

Other embodiments may envisage the use of other types of flexible hoses, it being understood that an inner layer of thermoplastic material formed by a corrugated hose is always present.

In a preferred embodiment, the inner layer 12 and the fitting 20 are made of the same thermoplastic material, preferably nylon, polyester or polypropylene.

It should be noted that a qualifying characteristic feature of the present invention is that of being able to provide a hose and fitting assembly 1 having a hose which is sufficiently soft and flexible to satisfy the requirements of installation engineers. Consequently, the various embodiments proposed above for the flexible hose 10 will all have preferably the technical feature of a high degree of flexibility. In particular, the minimum radius of curvature for this flexible hose 10 will be preferably chosen so as to be equal to or less than the outer diameter of the said hose. In order to obtain this feature, where the inner layer 12 is not of the corrugated type, in a manner known per se the appropriate plasticizing additives are used for formation of the thermoplastic material which defines the rigidity of the hose.

The fitting 20 is instead made by means of injection-moulding or turning of rigid thermoplastic material. Preferably, the thermoplastic material used for moulding the fitting 20 is the same thermoplastic material used for the inner layer 12.

The fitting 20 is specifically formed so that it can be fixed to an attachment end 11 of the flexible hose 10.

In particular it has a longitudinal extension, with two end portions which extend from a cylindrical main body 26 having a diameter equal to or greater than that of the flexible hose.

One end, provided with a first opening 23, is designed to be engaged with the apparatus and/or the water mains, while the opposite end, which is provided with a second opening 24, is instead designed to be integrally joined together with the aforementioned flexible hose 10.

A fluid path 22 is defined between the first opening 23 and the second opening 24. In the embodiment described here, the two openings 22, 23 are arranged opposite each other and the fluid path 22 is straight; it is obviously possible to provide a fluid path with an elbow configuration or other form, depending on the specific requirements.

The end portion where the first opening 23 is provided has the form of a coaxial cylindrical head 28 having a diameter larger than that of the main body 26 adjacent thereto and provided with an end flange. A clamping bush - not shown since conventional - may bear against the end flange. Alternatively, the fitting may have a terminal portion of a different type depending on its specific function, for example it may be of the threaded type or define a quick-fit connection.

Also present in the region of the first opening 23 is a non-cylindrical attachment profile 40 which, in the embodiment described here has an inset hexagonal profile, allowing the fitting 20 to be stably connected to a spindle during a spin welding operation described below.

The end portion provided with the second opening 24 instead has the form of a coaxial, tubular, attachment lug 21 with a diameter smaller than that of the main body adjacent thereto. The change in diameter between the attachment lug 21 and the main body 26 defines a shoulder 27.

The attachment end 11 of the flexible hose 10 is fitted on top of the aforementioned attachment lug 21 until it reaches the stop defined by the shoulder 27. In other words, the attachment lug 21 forms a male connector engaging inside the end of the flexible hose 10.

At least in its configuration prior to assembly, namely before being deformed by the spin welding operation, the outer surface of the attachment lug 21 has a plurality of protrusions 21a intended to facilitate provisional fixing of the flexible hose; it also has, at its free end, an inclined portion for defining a guiding surface for introduction of flexible hose 10. The attachment lug 21 may obviously be differently shaped, for example it may be partially or totally smooth.

Following spin welding, the localized melting of the thermoplastic parts making contact with each other defines a weld 14 between the attachment lug 21 and the inner layer 12 of the flexible hose 10. This weld 14 ensures in particular the basic fluid-tightness of the fitting 20.

In the corrugated inner layer 12, there may be a plurality of localized welds 14 on each of the successive inner ridges 12a of the corrugated hose. A plurality of impermeable seals arranged in series is thus provided such that, should some of said seals 14 break, the overall fluid-tightness of the device is not adversely affected.

In the corrugated inner layer 12, the protrusions 21a may be advantageously arranged equidistant from each other at a distance equal to that separating the successive inner ridges 12a of the hose, in order to facilitate the formation of the welds 14 described above.

The hose and fitting assembly 1 also comprises a cylindrical ferrule 15, which is preferably metallic, even though an alternative version made of plastic is also possible, said ferrule being arranged partially over the main body 26 and partially over the reinforcing layer 13 of the flexible hose 10. Said ferrule 15 is clamped by means of crimping so as to ensure the mechanical strength of the flexible hose 10 / fitting 20 assembly, in particular as regards its resistance to axial extraction.

In order to fix together the flexible hose 10 and the fitting 20 described above and obtain the hose and fitting assembly 1 according to the present invention, the method described below is used.

During a first step, the attachment lug 21 is inserted with interference inside the attachment end 11 of the flexible hose 10.

The insertion operation thus allows the inner surface of the inner layer 12 to be brought into contact with the outer surface of the attachment lug 21. The end comes up against the stop defined by the shoulder 27. In the case of a corrugated inner hose 12, the inner ridges 12a are positioned aligned with the protrusions 21a of the attachment lug 21, improving the interference and the subsequent adhesion.

During the insertion step it is also envisaged positioning the ferrule 15 over the flexible hose 10 and the main body 26.

In particular, the ferrule 15 may be fixed firstly onto the main body 26 such that, during engagement of the flexible hose 10 onto the attachment lug 21, the end of the flexible hose 10 is introduced inside the ferrule portion 15 projecting from the main body 26.

During a second step, the known technology of spin welding is used in order to join the fitting 20 together with the attachment end 11 of the flexible hose 10.

In particular, by using an operating machine suitable for this purpose, a rapid rotation of the fitting 20 may be performed with respect to the hose end kept fixed. The heat produced by the friction between the two parts helps cause partial melting of the thermoplastic surfaces which make contact, thus forming a weld when the surfaces cool.

The spin welding operation is performed after connecting the attachment profile 40 of the fitting 20 to the spindle of the operating machine, with a speed of rotation roughly of between 500 and 6000 rpm and applying axial compression forces between flexible hose 10 and fitting 20 of between 0.5 N and 7 N.

The spin welding operation ensures a strong and absolutely fluid-tight weld, eliminating a potential leakage point in the connection of the apparatus to the water mains, even when a hose comprising a braided reinforcement is used.

During a third step, the ferrule 15 is clamped by means of crimping onto the attachment end 11 of the flexible hose 10. The crimped ferrule acts as a strap for fixing the attachment end 11 on the underlying fitting 20, preventing axial extraction of the flexible hose 10.

It is pointed out once again how the crimping operation, differently from its use in the prior art, is not used to ensure a pressure-tight seal, but to increase the extraction resistance and thus increase the pressure resistance.

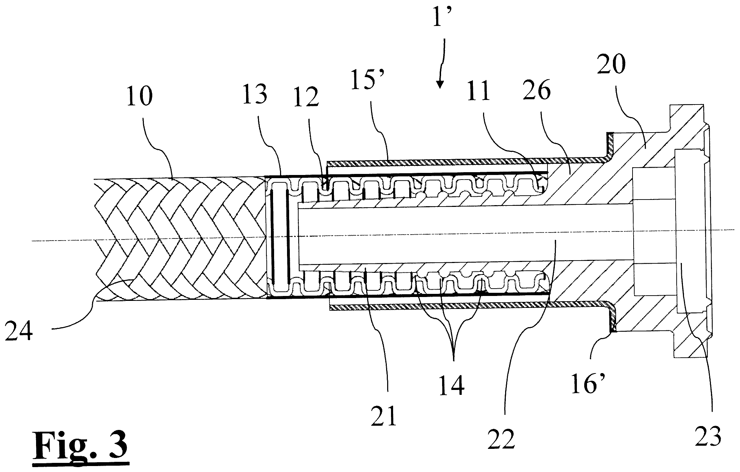

The alternative variants shown in Figures 3-6 are briefly described below, where the identical elements or the functional components have been indicated by the same reference numbers mentioned above.

The hose and fitting assembly 1' according to the second variant shown in Figure 3 differs from that described above owing to the different form of the ferrule 15' which in this case is not formed solely by a cylindrical body, but has an outwardly projecting end flange 16' which comes into contact against a shoulder of the fitting 20.

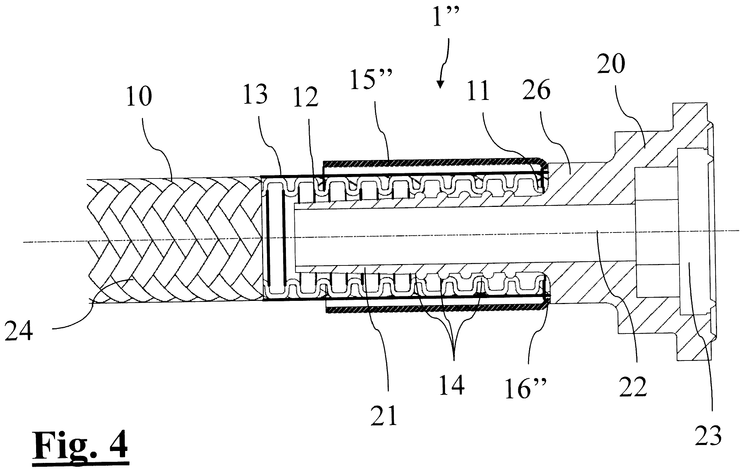

The hose and fitting assembly 1" according to the third variant shown in Figure 4 has instead an inwardly projecting end flange 16" which is inserted in a manner known per se between the attachment end 11 of the flexible hose 10 and the main body 26 of the fitting 20.

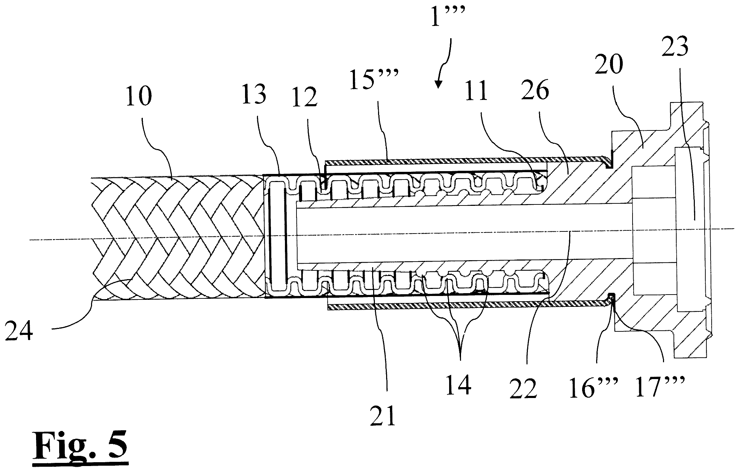

The hose and fitting assembly 1'" according to the fourth variant shown in Figure 5 also has an inwardly projecting end flange 16"' which is introduced however inside the main body 26 of the fitting 20 inside a special groove 17"' formed spaced from the stop surface for the attachment end of the flexible hose 10.

As already mentioned in the summary of the invention, it is pointed out finally how a crimped ferrule is solely one of the interference fit options which may be applied by a person skilled in the art in the context of the present invention. An alternative option is represented for example by the use of a frustoconical bush shimmed together with an opposite inner profile of the fitting.

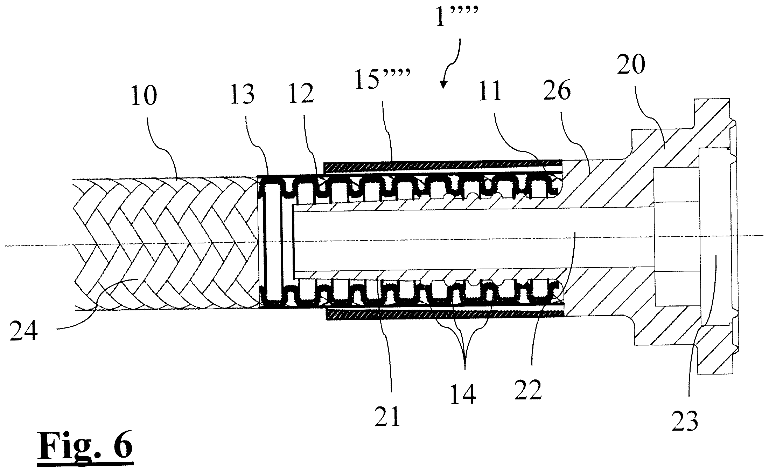

Such a solution is proposed in the hose and fitting assembly 1"" according to the fifth variant shown in Figure 6, where the aforementioned ferrule is replaced by a frustoconical sleeve 15"" designed to interfere, following axial sliding, with the attachment end 11 of the flexible hose 10, locking said end against the opposite surface of the attachment lug 21.

The main advantage of the invention described above consists in the possibility, not envisaged in the prior art, of providing a combined hose and fitting assembly where the flexible hose with braided reinforcement offers a high mechanical resistance to extraction of the hose from the fitting as well as an adequate mechanical pressure seal.

Especially advantageous moreover is the use of a corrugated hose which, while being particularly suitable for the requirements of the sector, hitherto could not be effectively integrated into a hose and fitting assembly.

A further advantage of the present invention arises from the highly repetitive nature of the spin welding operation where, once electronic adjustment of the machine has been performed, identical parts with the same quality are produced, reducing or eliminating the presence of production rejects.

A further additional advantage which may be mentioned is the possibility of combining functional layers and braided reinforcements made of non-homogeneous materials.

Obviously a person skilled in the art, in order to satisfy any specific requirements which might arise, may make numerous modifications and variations to the invention described above, all of which are contained moreover within the scope of protection of the invention, as defined by the following claims.

## Claims

1. Pressure-tight hose and fitting assembly (1; 1'; 1"; 1'"; 1""), designed for connecting an apparatus to a supply network, comprising: a flexible hose (10) comprising at least one inner layer (12) made of thermoplastic material and at least one textile or metallic reinforcing layer (13) on the outside of said inner layer (12); a fitting (20) made of thermoplastic material and comprising an attachment lug (21) introduced inside an attachment end (11) of said flexible hose (10), said fitting (20) defining internally a fluid path (22) between a first opening (23) and a second opening (24) at the end of said attachment lug (21); a weld (14) between said attachment lug (21) and the inner layer (12) of said flexible hose (10) at said attachment end (11), which weld locally defines a fluid seal; and an annular fixing member (15) coupled with interference fit on the outside of the attachment end (11) of said flexible hose (10), said fixing member (15; 15'; 15"; 15"'; 15"") exerting a clamping pressure on said attachment end (11); wherein said weld (14) is a spin weld; wherein said reinforcing layer (13) is a braided, spiralled, meshed, netted or otherwise formed layer made from one or more yarns or wires, **characterized in that** said inner layer (12) is a corrugated hose.

2. Hose and fitting assembly (1; 1'; 1"; 1'"; 1"") according to claim 1, wherein said reinforcing layer (13) is the outermost layer of said flexible hose (10), said fixing member (15; 15'; 15"; 15'"; 15"") being coupled directly onto said reinforcing layer (13).

3. Hose and fitting assembly (1; 1'; 1"; 1'"; 1"") according to any one of the preceding claims, wherein said corrugated hose has a plurality of inner ridges (12a), said weld (14) being between at least one of said inner ridges (12a) and an outer surface of the attachment lug (21).

4. Hose and fitting assembly (1; 1'; 1"; 1'"; 1"") according to any one of the preceding claims, wherein said fixing member takes the form of a ferrule (15; 15'; 15"; 15'") crimped onto the attachment end (11) of the flexible hose (10).

5. Hose and fitting assembly (1; 1'; 1"; 1'"; 1"") according to claim 4, wherein a portion of said ferrule (15; 15'; 15"; 15"') is fitted around a cylindrical main body (26) of the fitting (20), having a diameter equal or greater than that of the flexible hose (10).

6. Hose and fitting assembly (1; 1'; 1"; 1"'; 1"") according to one of claims 1 to 3, wherein said fixing member takes the form of a sleeve (15"") with a frustoconical inner profile coupled by means of interlocking or interference onto the attachment end (11) of the flexible hose (10).

7. Hose and fitting assembly (1; 1'; 1"; 1'"; 1"") according to any one of the preceding claims, wherein said fitting (20) has at least one non-cylindrical attachment profile (40) situated on the opposite side to the attachment lug (21) and designed to allow connection to a spindle of a spin welding machine.

8. Hose and fitting assembly (1; 1'; 1"; 1'"; 1"") according to any one of the preceding claims, wherein said attachment end (11) of the flexible hose (10) abuts against a shoulder (27) defined between the attachment lug (21) and the rest of the fitting (20).

9. Method of manufacturing a pressure-tight hose and fitting assembly (1; 1'; 1"; 1'"; 1""), designed for connecting an apparatus to the water mains, comprising the following steps:
- providing a flexible hose (10) comprising at least one inner layer (12) made of thermoplastic material and at least one textile or metal reinforcing layer (13) on the outside of said inner layer (12);
- providing a fitting (20) made of thermoplastic material and comprising an attachment lug (21), said fitting (20) defining internally a fluid path (22) between a first opening (23) and a second opening (24) at the end of said attachment lug (21);
- introducing said attachment lug (21) inside an attachment end (11) of said flexible hose (10);
- spin welding said attachment lug (21) to the inner layer (12) of the flexible hose (10);
- joining by means of interference an annular fixing member (15; 15'; 15"; 15"'; 15"") to the outside of the attachment end (11) of said flexible hose (10) so as to fasten the flexible hose (10) to the fitting (20);
wherein said step of providing a flexible hose (10) comprises a step of covering the inner layer (12) with one or more yarns or wires by means of braiding, spiralling, meshing or netting so as to form said reinforcing layer (13);
**characterized in that** said inner layer (12) is a corrugated hose.

10. Method according to claim 9, wherein said fixing member is a ferrule (15; 15'; 15"; 15'"), said step of coupling the fixing member comprising the crimping of said ferrule (15; 15'; 15"; 15'") onto the attachment end (11) of the flexible hose (10).

11. Method according to claim 9, wherein said fixing member is a sleeve (15""), said step of coupling the fixing member comprising axially sliding said sleeve (15"") until it engages, by means of interlocking or interference, onto the attachment end (11) of the flexible hose (10).

## Patentansprüche

1. Druckdichte Schlauch- und Armaturenanordnung (1; 1'; 1"; 1"'; 1""), die zum Anschluss einer Vorrichtung an ein Versorgungsnetz bestimmt ist, umfassend: einen flexiblen Schlauch (10), der mindestens eine innere Schicht (12) aus thermoplastischem Material und mindestens eine textile oder metallische Verstärkungsschicht (13) auf der Außenseite der inneren Schicht (12) umfasst; eine Armatur (20) aus thermoplastischem Material und ein Befestigungszapfen (21), der in ein Befestigungsende (11) des flexiblen Schlauchs (10) eingeführt ist, wobei die Armatur (20) intern einen Fluidweg (22) zwischen einer ersten Öffnung (23) und einer zweiten Öffnung (24) am Ende des Befestigungszapfens (21) definiert; eine Schweißnaht (14) zwischen dem Befestigungszapfen (21) und der Innenschicht (12) des flexiblen Schlauches (10) an dem Befestigungsende (11), die lokal eine Fluiddichtung definiert; und ein ringförmiges Befestigungselement (15), das mit einem Presssitz an der Außenseite des Befestigungsendes (11) des flexiblen Schlauches (10) gekoppelt ist, wobei das Befestigungselement (15; 15'; 15"; 15"'; 15"") einen Klemmdruck auf das Befestigungsende (11) ausübt; wobei die Schweißnaht (14) eine Schleuderschweißung ist; wobei die Verstärkungsschicht (13) eine geflochtene, spiralförmige, vermaschte, vernetzte oder anderweitig gebildete Schicht aus einem oder mehreren Fäden oder Drähten ist, **dadurch gekennzeichnet, dass** die Innenschicht (12) ein Wellschlauch ist.

2. Schlauch- und Armaturenanordnung (1; 1'; 1"; 1'"; 1""') nach Anspruch 1, wobei die Verstärkungsschicht (13) die äußerste Schicht des flexiblen Schlauchs (10) ist, wobei das Befestigungselement (15; 15'; 15"; 15"'; 15"") direkt mit der Verstärkungsschicht (13) gekoppelt ist.

3. Schlauch- und Armaturenanordnung (1; 1'; 1"; 1"'; 1"") nach einem der vorhergehenden Ansprüche, wobei der Wellschlauch eine Vielzahl von inneren Rippen (12a) aufweist, wobei die Schweißnaht (14) zwischen mindestens einer der inneren Rippen (12a) und einer Außenfläche der Befestigungslasche (21) liegt.

4. Schlauch- und Armaturenanordnung (1; 1'; 1"; 1"'; 1"") nach einem der vorstehenden Ansprüche, wobei das Befestigungselement die Form einer Klemmhülse (15; 15'; 15"; 15"') hat, die auf das Befestigungsende (11) des flexiblen Schlauchs (10) gecrimpt ist.

5. Schlauch- und Armaturenanordnung (1; 1'; 1"; 1"'; 1"") nach Anspruch 4, wobei ein Abschnitt der Klemmhülse (15; 15'; 15"; 15"') um einen zylindrischen Hauptkörper (26) der Armatur (20) herum angebracht ist, der einen Durchmesser aufweist, der gleich oder größer ist als der des flexiblen Schlauchs (10).

6. Schlauch- und Armaturenanordnung (1; 1'; 1"; 1"'; 1"") nach einem der Ansprüche 1 bis 3, wobei das Befestigungselement die Form einer Hülse (15"") mit einem kegelstumpfförmigen Innenprofil aufweist, die durch Verriegelung oder Beeinflussung mit dem Befestigungsende (11) des flexiblen Schlauchs (10) gekoppelt ist.

7. Schlauch- und Armaturenanordnung (1; 1'; 1"; 1"'; 1"") nach einem der vorstehenden Ansprüche, wobei die Armatur (20) mindestens ein nicht-zylindrisches Befestigungsprofil (40) aufweist, das sich auf der dem Befestigungszapfen (21) gegenüberliegenden Seite befindet und dazu bestimmt ist, eine Verbindung mit einer Spindel einer Spinnschweißmaschine zu ermöglichen.

8. Schlauch- und Armaturenanordnung (1; 1'; 1"; 1"'; 1"") nach einem der vorhergehenden Ansprüche, wobei das Befestigungsende (11) des flexiblen Schlauchs (10) an einer Schulter (27) anliegt, die zwischen dem Befestigungszapfen (21) und dem Rest der Armatur (20) definiert ist.

9. Verfahren zur Herstellung einer druckdichten Schlauch- und Armaturenanordnung (1; 1'; 1"; 1"'; 1""), die zum Anschluss eines Gerätes an das Wasserleitungsnetz bestimmt ist, umfassend die folgenden Schritte:
- Bereitstellen eines flexiblen Schlauchs (10), der mindestens eine Innenschicht (12) aus thermoplastischem Material und mindestens eine Textil- oder Metallverstärkungsschicht (13) auf der Außenseite der Innenschicht (12) umfasst;
- Bereitstellen einer Armatur (20) aus thermoplastischem Material, die einen Befestigungszapfen (21) umfasst, wobei die Armatur (20) intern einen Fluidweg (22) zwischen einer ersten Öffnung (23) und einer zweiten Öffnung (24) am Ende des Befestigungszapfens (21) definiert;
- Einführen des Befestigungszapfens (21) in ein Befestigungsende (11) des flexiblen Schlauchs (10);
- Spinnverschweißen des Befestigungszapfens (21) mit der Innenschicht (12) des flexiblen Schlauchs (10);
- Verbinden eines ringförmigen Befestigungselements (15; 15'; 15"; 15"'; 15"") mit der Außenseite des Befestigungsendes (11) des flexiblen Schlauchs (10) durch Interferenz, um den flexiblen Schlauch (10) an der Armatur (20) zu befestigen;
wobei der Schritt des Bereitstellens eines flexiblen Schlauchs (10) einen Schritt des Bedeckens der inneren Schicht (12) mit einem oder mehreren Garnen oder Drähten mittels Flechten, Wickeln, Vernetzen oder Netzen umfasst, um die Verstärkungsschicht (13) zu bilden;
**dadurch gekennzeichnet, dass** die Innenschicht (12) ein Wellschlauch ist.

10. Verfahren nach Anspruch 9, wobei das Befestigungselement eine Klemmhülse (15; 15'; 15"; 15"') ist, wobei der Schritt des Koppelns des Befestigungselements das Crimpen der Klemmhülse (15; 15'; 15"; 15'") auf das Befestigungsende (11) des flexiblen Schlauchs (10) umfasst.

11. Verfahren nach Anspruch 9, wobei das Befestigungselement eine Hülse (15"") ist, wobei der Schritt des Koppelns des Befestigungselements ein axiales Gleiten der Hülse (15"") umfasst, bis sie mittels Verriegelung oder Interferenz am Befestigungsende (11) des flexiblen Schlauchs (10) in Eingriff kommt.

## Revendications

1. Ensemble tuyau étanche à la pression et raccord (1 ; 1' ; 1" ; 1'"; 1"") conçu pour raccorder un appareil à un réseau d'alimentation, comprenant : un tuyau flexible (10) comprenant au moins une couche intérieure (12) en matière thermoplastique et au moins une couche de renforcement (13) en textile ou en métal sur la face extérieure de ladite couche intérieure (12) ; un raccord (20) en matière thermoplastique comprenant un tenon d'accrochage (21) introduit dans une extrémité d'accrochage (11) dudit tuyau flexible (10), ledit raccord (20) définissant à l'intérieur un trajet de fluide (22) entre une première ouverture (23) et une seconde ouverture (24) à l'extrémité dudit tenon d'accrochage (21) ; une soudure (14) entre ledit tenon d'accrochage (21) et la couche intérieure (12) dudit tuyau flexible (10) au niveau de ladite extrémité d'accrochage (11), laquelle soudure définissant localement un joint étanche aux fluides ; et un élément de fixation annulaire (15) couplé par ajustement serré sur la face extérieure de l'extrémité d'accrochage (11) dudit tuyau flexible (10), ledit élément de fixation (15 ; 15' ; 15" ; 15"'; 15"") exerçant une pression de serrage sur ladite extrémité d'accrochage (11) ; ladite soudure (14) étant une soudure par rotation ; ladite couche de renforcement (13) étant une couche tressée, guipée, maillée, en filet ou autrement formée faite d'un ou plusieurs fils ou brins, **caractérisé en ce que** ladite couche intérieure (12) est un tuyau ondulé.

2. Ensemble tuyau et raccord (1 ; 1' ; 1 " ; 1"' ; 1"") selon la revendication 1, dans lequel ladite couche de renforcement (13) est la couche la plus à l'extérieure dudit tuyau flexible (10), ledit élément de fixation (15 ; 15' ; 15" ; 15"'; 15"") étant couplé directement sur ladite couche de renforcement (13).

3. Ensemble tuyau et raccord (1 ; 1' ; 1" ; 1'" ; 1"") selon l'une quelconque des revendications précédentes, dans lequel ledit tuyau ondulé a une pluralité de nervures intérieures (12a), ladite soudure (14) étant entre au moins une desdites nervures intérieures (12a) et une surface extérieure du tenon d'accrochage (21).

4. Ensemble tuyau et raccord (1 ; 1' ; 1" ; 1'" ; 1"") selon l'une quelconque des revendications précédentes, dans lequel ledit élément de fixation se présente sous la forme d'une virole (15 ; 15' ; 15" ; 15"') sertie sur l'extrémité d'accrochage (11) du tuyau flexible (10).

5. Ensemble tuyau et raccord (1 ; 1' ; 1 " ; 1"' ; 1"") selon la revendication 4, dans lequel une partie de ladite virole (15 ; 15'; 15" ; 15"') est montée autour d'un corps principal cylindrique (26) du raccord (20) qui a un diamètre égal ou supérieur à celui du tuyau flexible (10).

6. Ensemble tuyau et raccord (1; 1'; 1"; 1'"; 1"") selon l'une des revendications 1 à 3, dans lequel ledit élément de fixation se présente sous la forme d'un manchon (15"") avec un profil intérieur tronconique couplé par enclenchement ou ajustement serré sur l'extrémité d'accrochage (11) du tuyau flexible (10).

7. Ensemble tuyau et raccord (1 ; 1' ; 1" ; 1'" ; 1"") selon l'une quelconque des revendications précédentes, dans lequel ledit raccord (20) comprend au moins un profilé d'accrochage non cylindrique (40) situé du côté opposé au tenon d'accrochage (21) et conçu pour permettre une connexion à une broche d'une machine de soudage par rotation.

8. Ensemble tuyau et raccord (1 ; 1' ; 1" ; 1'" ; 1"") selon l'une quelconque des revendications précédentes, dans lequel ladite extrémité d'accrochage (11) du tuyau flexible (10) s'appuie contre un épaulement (27) défini entre le tenon d'accrochage (21) et le reste du raccord (20).

9. Procédé de fabrication d'un ensemble tuyau étanche à la pression et raccord (1 ; 1' ; 1" ; 1'" ; 1""), conçu pour raccorder un appareil aux conduites principales d'eau, comprenant les étapes suivantes consistant à :
- fournir un tuyau flexible (10) comprenant au moins une couche intérieure (12) en matière thermoplastique et au moins une couche de renforcement (13) en textile ou en métal sur la face extérieure de ladite couche intérieure (12) ;
- fournir un raccord (20) en matière thermoplastique comprenant un tenon d'accrochage (21), ledit raccord (20) définissant à l'intérieur un trajet de fluide (22) entre une première ouverture (23) et une seconde ouverture (24) à l'extrémité dudit tenon d'accrochage (21) ;
- introduire ledit tenon d'accrochage (21) dans une extrémité d'accrochage (11) dudit tuyau flexible (10) ;
- souder par rotation ledit tenon d'accrochage (21) sur la couche intérieure (12) du tuyau flexible (10) ;
- assembler par ajustement serré un élément de fixation annulaire (15 ; 15' ; 15" ; 15"'; 15"") sur la face extérieure de l'extrémité d'accrochage (11) dudit tuyau flexible (10) afin de fixer le tuyau flexible (10) au raccord (20) ;
procédé dans lequel ladite étape consistant à préparer un tuyau flexible (10) comprend une étape consistant à recouvrir la couche intérieure (12) avec un ou plusieurs fils ou brins par réalisation d'une tresse, d'une spirale, d'un maillage ou d'un filet afin de former ladite couche de renforcement (13) ;
**caractérisé en ce que** ladite couche intérieure (12) est un tuyau ondulé.

10. Procédé selon la revendication 9, dans lequel ledit élément de fixation est une virole (15 ; 15' ; 15" ; 15"'), ladite étape de couplage de l'élément de fixation comprenant le sertissage de ladite virole (15 ; 15' ; 15" ; 15'") sur l'extrémité d'accrochage (11) du tuyau flexible (10).

11. Procédé selon la revendication 9, dans lequel ledit élément de fixation est un manchon (15""), ladite étape de couplage de l'élément de fixation comprenant le coulissement axial dudit manchon (15"") jusqu'à ce qu'il se mette en prise, par enclenchement ou ajustement serré, sur l'extrémité d'accrochage (11) du tuyau flexible (10).
